# EUROPEAN PATENT APPLICATION

(11) **EP 3 954 613 A1**
(43) Date of publication of application: **16.02.2022**
(21) Application number: 20788646.6
(22) Date of filing: 03.04.2020
(51) Int. Cl.: B64D 35/06, B63H 23/04

(54) **COAXIAL CONTRA-ROTATING CIRCUMFERENTIAL PROPELLER**

(30) Priority: 07.04.2019 CN 201910273879
(71) Applicant: Luo, Can, Kunming, Yunnan 650000 (CN)
(72) Inventor: Luo, Can, Kunming, Yunnan 650000 (CN)
(74) Representative: Proi World Intellectual Property GmbH
(86) International application number: PCT/CN2020/083135
(87) International publication number: WO 2020/207337

(57) **Abstract**

The present invention provides a coaxial contra-rotating circumferential thruster, comprising an input end (1), a one-way commutator, a two-way deflector, a steering support and two output ends (13, 14). The input end is connected to a power device. The one-way commutator converts one rotation into two rotations having the same rotation speed and opposite rotation directions. The two-way deflector respectively indirectly connects two shafts of a contra-rotating sleeve shaft to two output shafts thereof by means of two bevel gear pairs (5-8). Two unidirectional deflecting torques respectively generated by the two bevel gear pairs have the same magnitude and opposite directions. By transferring by means of a bracket or an output sleeve shaft (12), the two unidirectional deflecting torques cancel each other. The two output ends are respectively connected to two propellers (or rotors). A turnaround control device controls the steering support to be turned around, the control torque required for co-rotating and contra-rotating is the same, the turnaround control torque is small, and the control device is small.

## Description

### TECHNICAL FIELD

The present invention relates to a transmission structure of a two-propeller (or rotor) thruster, which is composed of an input end, a one-way commutator, a two-way deflector, a steering support and two output ends, wherein when the power is transmitted from the input end to the two output ends, the transmission structure is simple, the two output ends may be controlled to be synchronously turned around an axis of the contra-rotating sleeve shaft, and the two output ends drive the two propellers (or rotors) to be turned around, the turnaround control torque for controlling the turnaround is very small, and the control device is very small. The thruster is called a coaxial contra-rotating circumferential thruster.

### BACKGROUND

With respect to a traditional shaft-fixed propeller thruster, a shaft of the propeller is fixed and cannot be steered. With respect to a traditional shaft-movable propeller (or rotor) thruster, the transmission is carried out by means of bevel gear pairs, an output shaft is turned around an input shaft by forcibly driving a bearing of the output shaft to be turned around, so as to realize the steering of the shaft of the propeller (or rotor). Because it is necessary to overcome the unidirectional deflecting torque to drive the bearing of the output shaft to be turned around, and the control torque for co-rotating and contra-rotating during turnaround is different in magnitude, the rated turnaround control torque will be large, and the control device is also large. There is a unidirectional deflecting torque in the transmission structure of the traditional shaft-movable propeller thruster, and the propeller is not easy to be turned around, and thus the traditional shaft-movable propeller thruster is not a true circumferential thruster. The unidirectional deflecting torque is a torque that is automatically generated by the bevel gear pairs to make the output shaft rotate unidirectionally around the axis of the input shaft when power is transmitted, and is positively related to the input torque. The inventor has previously invented and declared a universal transmitter, in which the unidirectional deflecting torque is not generated when power is transmitted, the output shaft is easy to be turned around, the turnaround control torque is very small, and the control device is very small, and thus the thruster with such a universal transmitter is a true circumferential thruster. However, the transmission structure of the universal transmitter is complicated, and is mainly suitable for single-propeller (or rotor). The aviation industry and the navigation industry need a circumferential thruster suitable for two propellers (or rotors) in which the transmission structure is simple, the output shaft is easy to be turned around, and the control device is very small. The present invention proposes the transmission structure of such a circumferential thruster.

### SUMMARY

The coaxial contra-rotating circumferential thruster of the present invention is composed of an input end, a one-way commutator, a two-way deflector, a steering support and two output ends.

The power from a power device is input at the input end, and the input end is connected at the rear to a co-directional shaft.

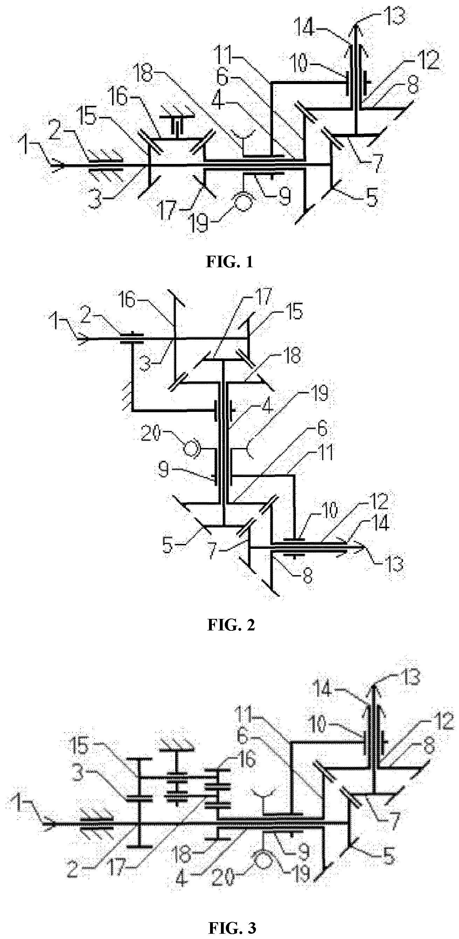

The function of the one-way commutator is to convert one rotation into two rotations having the same rotation speed and opposite rotation directions, and to respectively transmit these two rotations via the two shafts of a contra-rotating sleeve shaft. There are four types of the one-way commutator, one of which is selected: a first type of the one-way commutator, includes a co-directional shaft, a front bevel gear, a reversing bevel gear, a reversing bevel gear support, a rear bevel gear and a contra-rotating sleeve shaft, see the reference numerals 1, 2, 3, 4, 15, 16 and 17 in FIG. 1. The contra-rotating sleeve shaft is two shafts nested with each other on the same axis, which are respectively an inner shaft of the contra-rotating sleeve shaft and an outer shaft of the contra-rotating sleeve shaft. A bearing of the co-directional shaft is provided to be fixed, and the front bevel gear is provided on the co-directional shaft; the reversing bevel gear whose support is fixed is provided to be engaged with the front bevel gear, and an axis of the reversing bevel gear is perpendicular to an axis of the co-directional shaft. The reversing bevel gear is connected to a shaft lever, and a bearing thereof is fixed as a support. The contra-rotating sleeve shaft is provided to be located on the same axis as the co-directional shaft, a bearing of the contra-rotating sleeve shaft is fixed, and the rear bevel gear is provided to be engaged with the reversing bevel gear on the outer shaft of the contra-rotating sleeve shaft. The co-directional shaft is directly connected to the inner shaft of the contra-rotating sleeve shaft. The front bevel gear is indirectly connected to the rear bevel gear by means of the reversing bevel gear. The number of teeth of the front bevel gear is set to be equal to the number of teeth of the rear bevel gear, such that the transmission ratio of this indirect connection is equal to -1.0. The first type of the one-way commutator makes the inner shaft of the contra-rotating sleeve shaft and the outer shaft of the contra-rotating sleeve shaft have the same rotation speed and opposite rotation directions. A second type of the one-way commutator, includes a co-directional shaft, an inner driving bevel gear, an outer driving bevel gear, an inner driven bevel gear, an outer driven bevel gear and a contra-rotating sleeve shaft, see the reference numerals 1, 2, 3, 4, 15, 16, 17 and 18 in FIG. 2. A bearing of the co-directional shaft is provided to be fixed, the inner driving bevel gear and the outer driving bevel gear are provided on the co-directional shaft, and are respectively disposed on both sides of an axis of the contra-rotating sleeve shaft, the inner driving bevel gear is provided to pass through the axis of the contra-rotating sleeve shaft, and the outer driving bevel gear is provided without passing through the axis of the contra-rotating sleeve shaft. A bearing of the contra-rotating sleeve shaft is fixed, the axis of the contra-rotating sleeve shaft and the axis of the co-directional shaft are provided to form an included angle in the same plane, and the included angle is a transmission angle, the value of the transmission angle is determined according to actual needs, and the transmission angle in the Embodiment 2 of the present invention is 90 degrees. The inner driven bevel gear is provided on the inner shaft of the contra-rotating sleeve shaft to keep the inner driven bevel gear engaged with the inner driving bevel gear; and the outer driven bevel gear is provided on the outer shaft of the contra-rotating sleeve shaft to keep the outer driven bevel gear engaged with the outer driving bevel gear. The number of teeth of the inner driving bevel gear, the number of teeth of the outer driving bevel gear, the number of teeth of the inner driven bevel gear and the number of teeth of the outer driven bevel gear are set such that the transmission ratio from the co-directional shaft to the inner shaft of the contra-rotating sleeve shaft is equal to the negative value of the transmission ratio from the co-directional shaft to the outer shaft of the contra-rotating sleeve shaft; for example, let the number of teeth of the inner driving bevel gear = the number of teeth of the inner driven bevel gear and the number of teeth of the outer driving bevel gear = the number of teeth of the outer driven bevel gear. The second type of the one-way commutator makes the inner shaft of the contra-rotating sleeve shaft and the outer shaft of the contra-rotating sleeve shaft have the same rotation speed and opposite rotation directions. A third type of the one-way commutator, includes a co-directional shaft, a front gear, an inner side shaft gear, an outer side shaft front gear, an outer side shaft rear gear, an inner side shaft, an outer side shaft, a rear gear and a contra-rotating sleeve shaft, see the reference numerals 1, 2, 3, 4, 15, 16, 17 and 18 in FIG. 3. A bearing of the co-directional shaft is provided to be fixed, the front gear is provided on the co-directional shaft; the inner side shaft and the outer side shaft whose axes are respectively parallel to an axis of the co-directional shaft and whose bearings are both fixed are provided, the inner side shaft gear is provided on the inner side shaft, and the outer side shaft front gear and the outer side shaft rear gear are sequentially provided on the outer side shaft; and the rear gear is provided on the outer shaft of the contra-rotating sleeve shaft. The front gear is provided to be engaged with the outer side shaft front gear, the outer side shaft rear gear is provided to be engaged with the inner side shaft gear, and the inner side shaft gear is provided to be engaged with the rear gear. The contra-rotating sleeve shaft is provided to be located on the same axis as the co-directional shaft, a bearing of the contra-rotating sleeve shaft is fixed, and the co-directional shaft is provided to be directly connected to the inner shaft of the contra-rotating sleeve shaft. The front gear is indirectly connected to the rear gear by means of the outer side shaft front gear, the outer side shaft rear gear and the inner side shaft gear. The number of teeth of the inner side shaft gear, the number of teeth of the outer side shaft front gear, the number of teeth of the outer side shaft rear gear, the number of teeth of the front gear and the number of teeth of the rear gear are set such that the transmission ratio of this indirect connection is equal to -1.0, for example: let the number of teeth of the outer side shaft rear gear = the number of teeth of the inner side shaft gear = the number of teeth of the rear gear = N, and let the number of teeth of the front gear = the number of teeth of the outer side shaft front gear = 2*N, where N is a natural number greater than 8. The third type of the one-way commutator makes the inner shaft of the contra-rotating sleeve shaft and the outer shaft of the contra-rotating sleeve shaft have the same rotation speed and opposite rotation directions. A fourth type of the one-way commutator, includes a co-directional shaft, an inner driving bevel gear, an outer driving bevel gear, an inner driven bevel gear, an outer driven bevel gear and a contra-rotating sleeve shaft, see the reference numerals 1, 2, 3, 4, 15, 16, 17, and 18 in FIG. 4. A bearing of the co-directional shaft is provided to be fixed, and the inner driving bevel gear and the outer driving bevel gear are provided on the co-directional shaft, and are respectively disposed on both sides of an axis of the contra-rotating sleeve shaft, the inner driving bevel gear is provided without passing through the axis of the contra-rotating sleeve shaft, and the outer driving bevel gear is provided to pass through the axis of the contra-rotating sleeve shaft. A bearing of the contra-rotating sleeve shaft is fixed, the axis of the contra-rotating sleeve shaft and the axis of the co-directional shaft are provided to form an included angle in the same plane, and the included angle is a transmission angle, the value of the transmission angle is determined according to actual needs, and the transmission angle in the Embodiment 4 of the present invention is 90 degrees. The inner driven bevel gear is provided on the inner shaft of the contra-rotating sleeve shaft to keep the inner driven bevel gear engaged with the inner driving bevel gear; and the outer driven bevel gear is provided on the outer shaft of the contra-rotating sleeve shaft to keep the outer driven bevel gear engaged with the outer driving bevel gear. The number of teeth of the inner driving bevel gear, the number of teeth of the outer driving bevel gear, the number of teeth of the inner driven bevel gear and the number of teeth of the outer driven bevel gear are set such that the transmission ratio from the co-directional shaft to the inner shaft of the contra-rotating sleeve shaft is equal to the negative value of the transmission ratio from the co-directional shaft to the outer shaft of the contra-rotating sleeve shaft; for example, let the number of teeth of the inner driving bevel gear = the number of teeth of the inner driven bevel gear and the number of teeth of the outer driving bevel gear = the number of teeth of the outer driven bevel gear. The fourth type of the one-way commutator makes the inner shaft of the contra-rotating sleeve shaft and the outer shaft of the contra-rotating sleeve shaft have the same rotation speed and opposite rotation directions.

The function of the two-way deflector is, by means of two bevel gear pairs, to indirectly connect the inner shaft of the contra-rotating sleeve shaft to a first output shaft, and to indirectly connect the outer shaft of the contra-rotating sleeve shaft to a second output shaft. The unidirectional deflecting torque automatically generated by the inner shaft of the contra-rotating sleeve shaft to the first output shaft and the unidirectional deflecting torque automatically generated by the outer shaft of the contra-rotating sleeve shaft to the second output shaft have the same magnitude and opposite directions. By transferring by means of a bracket or an output sleeve shaft, the two unidirectional deflecting torques cancel each other. The bevel gear pair is a mature technology, and the bevel gear pair is a pair of bevel gears that are engaged with each other for transmission, and the axis of the input shaft thereof and the axis of the output shaft thereof intersect with each other, the included angle of the intersection is called a deflecting angle, the ratio of the rotation speed of the input shaft thereof to the rotation speed of the output shaft thereof is the transmission ratio thereof. The two-way deflector includes a first driving bevel gear, a first driven bevel gear, a first output shaft, a second driving bevel gear, a second driven bevel gear and a second output shaft. The first driving bevel gear is provided on the inner shaft of the contra-rotating sleeve shaft, the axis of the first output shaft is provided to intersect with the axis of the contra-rotating sleeve shaft, the included angle of the intersection is a first deflecting angle, and the first driven bevel gear is provided on the first output shaft to keep the first driving bevel gear engaged with the first driven bevel gear. The second driving bevel gear is provided on the outer shaft of the contra-rotating sleeve shaft, and the axis of the second output shaft is provided to intersect with the axis of the contra-rotating sleeve shaft, the included angle of the intersection is a second deflecting angle, and the second driven bevel gear is provided on the second output shaft to keep the second driving bevel gear engaged with the second driven bevel gear. The two bevel gear pairs include a bevel gear pair composed of the first driving bevel gear and the first driven bevel gear and a bevel gear pair composed of the second driving bevel gear and the second driven bevel gear. The first output shaft and the second output shaft of the two-way deflector each have an independent rotation speed; as a special case, the axes of the two output shafts are located in the same plane, as another special case, the first deflecting angle and the second deflecting angle of the two output shafts are equal; as a more special case, the axes of the two output shafts are located in the same plane and the first deflecting angle and the second deflecting angle are equal, which is a special case where the two output shafts are nested into each other to form an output sleeve shaft.

The function of the steering support is to make the unidirectional deflecting torques received by the two output shafts cancel each other by transferring by means of a bracket or an output sleeve shaft; and to make the two output shafts be turned around under the control of the turnaround control device. The steering support includes a shaft-fixed component, a bracket and a shaft-movable bearing. The shaft-fixed component is a machine that is turned around the axis of the contra-rotating sleeve shaft, and there are three types of the shaft-fixed component, one of which is selected: a first type of the shaft-fixed component is a bearing that is provided on the periphery of the contra-rotating sleeve shaft, and the bearing supports the contra-rotating sleeve shaft, see the reference numeral 9 in FIG. 1. A second type of the shaft-fixed component is a shaft that is provided on the axis of the contra-rotating sleeve shaft, and the bearing of which is fixed, see the reference numeral 9 in FIG. 2. A third type of the shaft-fixed component is a bearing that is provided on the axis of the contra-rotating sleeve shaft, the shaft of which is fixed, see the reference numeral 9 in FIG. 3. The shaft-movable bearing is a bearing that supports the output shaft and is provided on the periphery of the output shaft; the first shaft-movable bearing supports the first output shaft and is provided on the periphery of the first output shaft; and the second shaft-movable bearing supports the second output shaft and is provided on the periphery of the second output shaft. In a special case when the two output shafts form the output sleeve shaft, the first shaft-movable bearing and the second shaft-movable bearing are combined into a shaft-movable bearing that supports the output sleeve shaft and is provided on the periphery of the output sleeve shaft. The bracket is a connecting machine that directly connects the shaft-fixed component to all the shaft-movable bearings, and the direct connection makes the rotation speed of the steering support unchanged. When the bracket directly connects the shaft-fixed component to all the shaft-movable bearings, the entire steering support may be turned around the axis of the contra-rotating sleeve shaft. The turnaround refers to that the components such as the steering support, the two output shafts, and the two output ends rotate in forward or reverse directions around the axis of the contra-rotating sleeve shaft, and the rotation angle is up to 360 degrees without other mechanical obstacles. The steering support is directly connected or indirectly connected to the turnaround control device, and is turned around under the control of the turnaround control device. The turnaround control device controls the steering support to be turned around, drives the two output ends to be turned around, and drives the two propellers to be turned around. The control torque required for co-rotating and contra-rotating during turnaround is the same, the turnaround control torque is very small, and the control device is very small. The indirect connection between the steering support and the turnaround control device includes an indirect connection by means of a gear pair, an indirect connection by means of a worm gear, an indirect connection by means of a connecting rod machine, an indirect connection by means of a hydraulic machine and an indirect connection by means of a gear rack, and so on.

The two output ends are respectively a first output end and a second output end, the output shaft where the first output end is located is the first output shaft, and the output shaft where the second output end is located is the second output shaft. The two output ends are respectively connected to the two propellers (or rotors). In a special case when the two output shafts form the output sleeve shaft, the two output ends are respectively connected to the two propellers (or rotors) of the coaxial contra-rotating double-propellers (or rotor). The coaxial contra-rotating double-propeller (or rotor) is a mature technology and refers to a double-propeller (or rotor) having the same axis and opposite rotation directions. The propellers (or rotors) are a mature technology, and include blades, and pitch-changing devices, among others.

The power device adopts a mature technology such as an electric power device, a steam power device or a fuel power device. The turnaround control device adopts a mature technology such as an electric mechanism, a mechanical mechanism or a hydraulic mechanism. The base of the turnaround control device is fixed. The fixed shaft, the fixed base, the fixed support or the fixed bearing means that the shaft, the base, the support or the bearing is connected to a ship hull or aircraft fuselage by means of a connecting machine. Fixing the shaft, the base, the support or the bearing makes the rotation speed thereof zero. The sleeve shaft is a mature technology, and multiple layers of bearings support multiple layers of shafts, the relative rotation may occur between the bearing and the shaft and between the shafts, but the bearings and the shafts will not slide relatively in an axial direction. Each bearing is a mature technology, the bearing supports the shaft, the relative rotation may occur between the bearing and the shaft, but the bearing and the shaft will not slide relatively in an axial direction. The direct connection means that the rotation speeds of the connected objects are the same through mechanical connection, and the indirect connection means that the rotation speeds of the two driven objects are deterministically related through mechanical transmission. The keeping in sync means that two objects are directly connected. The connection is usually a direct connection, and an indirect connection will be specifically indicated. With respect to providing a gear or a bevel gear on a shaft, the provided gear or bevel gear is kept synchronized with the shaft. The worm gear, gear pair, connecting rod machine, hydraulic machine and gear rack are mature technologies, and the function of which is to convert the control of the turnaround control device into the turnaround of the steering support.

The coaxial contra-rotating circumferential thruster of the present invention is beneficial in that there is proposed a transmission structure of a two-propeller (or rotor) thruster having a simple structure, the control torque for co-rotating and contra-rotating of the propellers during turnaround is controlled to be the same when power is transmitted, the turnaround control torque is very small, and the control device is very small. The function of the coaxial contra-rotating circumferential thruster of the present invention is far beyond that of the traditional shaft-movable propeller thruster. The transmission structure of the coaxial contra-rotating circumferential thruster of the present invention is simpler than that of a universal transmitter, and can improve the transmission and control of the two propellers (or rotors).

### BRIEF DESCRIPTION OF THE DRAWINGS

FIG. 1 is a schematic diagram showing a first example of a coaxial contra-rotating circumferential thruster, which is also a schematic diagram of Embodiment 1 of the present invention. In FIG. 1, the reference numeral 1 refers to an input end, 2 to a bearing of a co-directional shaft, 3 to a co-directional shaft, 4 to a contra-rotating sleeve shaft, 5 to a first driving bevel gear, 6 to a second driving bevel gear, 7 to a first driven bevel gear, 8 to a second driven bevel gear, 9 to a shaft-fixed component, 10 to a bracket, 11 to a shaft-movable bearing, 12 to an output sleeve shaft, 13 to a first output end, 14 to a second output end, 15 to a front bevel gear, 16 to a reversing bevel gear, 17 to a rear bevel gear, 18 to a worm wheel, and 19 to a worm.
FIG. 2 is a schematic diagram showing a second example of a coaxial contra-rotating circumferential thruster, which is also a schematic diagram of Embodiment 2 of the present invention. In FIG. 2, the reference numeral 1 refers to an input end, 2 to a bearing of a co-directional shaft and a bearing of a contra-rotating sleeve shaft, 3 to a co-directional shaft, 4 to a contra-rotating sleeve shaft, 5 to a first driving bevel gear, 6 to a second driving bevel gear, 7 to a first driven bevel gear, 8 to a second driven bevel gear, 9 to a shaft-fixed component, 10 to a bracket, 11 to a first shaft-movable bearing, 12 to a second shaft-movable bearing, 13 to a first output end, 14 to a second output end, 15 to an inner driving bevel gear, 16 to an outer driving bevel gear, 17 to an inner driven bevel gear, 18 to an outer driven bevel gear, 19 to a first output shaft, and 20 to a second output shaft.
FIG. 3 is a schematic diagram showing a third example of a coaxial contra-rotating circumferential thruster, which is also a schematic diagram of Embodiment 3 of the present invention. In FIG. 3, the reference numeral 1 refers to an input end, 2 to a co-directional shaft, 3 to a front gear, 4 to a contra-rotating sleeve shaft, 5 to a first driving bevel gear, 6 to a second driving bevel gear, 7 to a first driven bevel gear, 8 to a second driven bevel gear, 9 to a shaft-fixed component, 10 to a bracket, 11 to a shaft-movable bearing, 12 to an output sleeve shaft, 13 to a first output end, 14 to a second output end, 15 to an outer side shaft front gear, 16 to an outer side shaft rear gear, 17 to an inner side shaft gear, 18 to a rear gear, 19 to a worm wheel, and 20 to a worm.
FIG. 4 is a schematic diagram showing a fourth example of a coaxial contra-rotating circumferential thruster, which is also a schematic diagram of Embodiment 4 of the present invention. In FIG. 4, the reference numeral 1 refers to is an input end, 2 to a bearing of a co-directional shaft and a bearing of a contra-rotating sleeve shaft, 3 to a co-directional shaft, 4 to a contra-rotating sleeve shaft, 5 to a first driving bevel gear, 6 to a second driving bevel gear, 7 to a first driven bevel gear, 8 to a second driven bevel gear, 9 to a shaft-fixed component, 10 to a bracket, 11 to a first shaft-movable bearing, 12 to a second shaft-movable bearing, 13 to a first output end, 14 to a second output end, 15 to an inner driving bevel gear, 16 to an outer driving bevel gear, 17 to an inner driven bevel gear, 18 to an outer driven bevel gear, 19 to a first output shaft, and 20 to a second output shaft.

In the drawings, the input end is schematically shown by an input arrow, and the output end is schematically shown by an output arrow, the propeller (or rotor) connected to the output end is not depicted, the power device connected to the input end is not depicted, and the turnaround control device connected to the steering support is not depicted. The ground symbol indicates that the corresponding component is fixed. The drawings only schematically show the relationships between the various components, and do not reflect the actual size of the components.

### DETAILED DESCRIPTION

**Embodiment 1:** Embodiment 1 of the coaxial contra-rotating circumferential thruster of the present invention is used for the transmission of double propellers of a ship, and is composed of an input end (1), a one-way commutator, a two-way deflector, a steering support and two output ends. Reference is made to FIG. 1.

The power from a power device is input at the input end (1), and the input end (1) is connected at the rear to a co-directional shaft (3).

The one-way commutator adopts a first type of the one-way commutator, including a co-directional shaft (3), a front bevel gear (15), a reversing bevel gear (16), a reversing bevel gear support, a rear bevel gear (17) and a contra-rotating sleeve shaft (4). The contra-rotating sleeve shaft includes an inner shaft of the contra-rotating sleeve shaft and an outer shaft of the contra-rotating sleeve shaft. A bearing of the co-directional shaft is fixed, and the front bevel gear (15) is provided on the co-directional shaft (3). The reversing bevel gear (16) whose support is fixed is provided to be engaged with the front bevel gear (15), and an axis of the reversing bevel gear is perpendicular to an axis of the co-directional shaft. The contra-rotating sleeve shaft (4) is provided to be located on the same axis as the co-directional shaft (3), and a bearing of the contra-rotating sleeve shaft is fixed. The rear bevel gear (17) is provided to be engaged with the reversing bevel gear (16) on the outer shaft of the contra-rotating sleeve shaft. The co-directional shaft (3) is directly connected to the inner shaft of the contra-rotating sleeve shaft, and the front bevel gear (15) is indirectly connected to the rear bevel gear (17) by means of the reversing bevel gear (16). The transmission ratio of this indirect connection is made equal to -1.0, and takes: the number of teeth of the front bevel gear = the number of teeth of the reversing bevel gear = the number of teeth of the rear bevel gear = 17. The inner shaft of the contra-rotating sleeve shaft and the outer shaft of the contra-rotating sleeve shaft have the same rotation speed and opposite rotation directions.

The two-way deflector includes a first driving bevel gear (5), a second driving bevel gear (6), a first driven bevel gear (7), a second driven bevel gear (8) and an output sleeve shaft (12). A first output shaft is an inner shaft of the output sleeve shaft and is connected to a first output end (13); and a second output shaft is an outer shaft of the output sleeve shaft and is connected to a second output end (14). The first driving bevel gear (5) is directly connected to the inner shaft of the contra-rotating sleeve shaft, and the second driving bevel gear (6) is directly connected to the outer shaft of the contra-rotating sleeve shaft. An axis of the output sleeve shaft and an axis of the contra-rotating sleeve shaft are provided to form an included angle in the same plane, the included angle is a deflecting angle, and the deflecting angle in this embodiment is 90 degrees. The first driven bevel gear (7) is provided on the inner shaft of the output sleeve shaft, and the second driven bevel gear (8) is provided on the outer shaft of the output sleeve shaft. The first driving bevel gear (5) is kept engaged with the first driven bevel gear (7), and the second driving bevel gear (6) is kept engaged with the second driven bevel gear (8). The transmission ratio from the inner shaft of the contra-rotating sleeve shaft to the inner shaft of the output sleeve shaft is made equal to the transmission ratio from the outer shaft of the contra-rotating sleeve shaft to the outer shaft of the output sleeve shaft, and takes: the number of teeth of the first driving bevel gear = the number of teeth of the first driven bevel gear = 17, and the number of teeth of the second driving bevel gear = the number of teeth of the second driven bevel gear = 19.

The steering support includes a shaft-fixed component (9), a bracket (10) and a shaft-movable bearing (11). A first type of the shaft-fixed component (9) is provided on the periphery of the contra-rotating sleeve shaft, that is, a bearing that supports the contra-rotating sleeve shaft, and the shaft-movable bearing (11) is provided on the periphery of the output sleeve shaft (12) to support the output sleeve shaft, the bracket (10) directly connects the shaft-fixed component (9) to the shaft-movable bearing (11), and the entire steering support may be turned around. A worm wheel (18) is provided on the shaft-fixed component (9), and the worm wheel (18) is kept synchronized with the shaft-fixed component (9), and a mating worm (19) is provided to be engaged with the worm wheel (18) to form a worm gear; the number of heads of the worm is 2, the number of teeth of the worm wheel is 30, and the transmission ratio of the worm gear is 15. The worm (19) is connected to a turnaround control device, and the turnaround control device adopts an electric mechanism.

The two output ends include a first output end (13) and a second output end (14), and the two output ends are respectively connected to two propellers of a coaxial contra-rotating double-propeller of a ship.

The contra-rotating sleeve shaft is arranged in the vertical direction of a hull, and the turnaround control device drives the steering support, the two output ends and the coaxial contra-rotating double-propeller to be turned around by means of the worm gear. The coaxial contra-rotating double-propeller of the ship may be turned around and propelled. The control torque required for co-rotating and contra-rotating during turnaround is the same, the turnaround control torque is very small, and the control device is very small.

**Embodiment 2:** Embodiment 2 of the coaxial contra-rotating circumferential thruster of the present invention is used for the transmission of two propellers of a submarine, and is composed of an input end (1), a one-way commutator, a two-way deflector, a steering support and two output ends. Reference is made to FIG. 2.

The power from a power device is input at the input end (1), and the input end (1) is connected at the rear to a co-directional shaft (3).

The one-way commutator adopts a second type of the one-way commutator, including a co-directional shaft (3), an inner driving bevel gear (15), an outer driving bevel gear (16), an inner driven bevel gear (17), an outer driven bevel gear (18) and a contra-rotating sleeve shaft (4). The contra-rotating sleeve shaft includes an inner shaft of the contra-rotating sleeve shaft and an outer shaft of the contra-rotating sleeve shaft. A bearing of the co-directional shaft is provided to be fixed, the outer driving bevel gear (16) and the inner driving bevel gear (15) are provided on the co-directional shaft (3), and are respectively disposed on both sides of an axis of the contra-rotating sleeve shaft, the inner driving bevel gear is provided to pass through the axis of the contra-rotating sleeve shaft, and the outer driving bevel gear is provided without passing through the axis of the contra-rotating sleeve shaft; the axis of the contra-rotating sleeve shaft and an axis of the co-directional shaft are provided to form a transmission angle in the same plane, and a bearing of the contra-rotating sleeve shaft is fixed, and the transmission angle in this embodiment is 90 degrees; the inner driven bevel gear (17) is provided on the inner shaft of the contra-rotating sleeve shaft, so that the inner driven bevel gear (17) is engaged with the inner driving bevel gear (15); and the outer driven bevel gear (18) is provided on the outer shaft of the contra-rotating sleeve shaft, so that the outer driven bevel gear (18) is engaged with the outer driving bevel gear (16). The transmission ratio from the co-directional shaft to the inner shaft of the contra-rotating sleeve shaft is made equal to the negative value of the transmission ratio from the co-directional shaft to the outer shaft of the contra-rotating sleeve shaft, and takes: the number of teeth of the inner driving bevel gear = the number of teeth of the inner driven bevel gear = 17, and the number of teeth of the outer driving bevel gear = the number of teeth of the outer driven bevel gear = 19. The inner shaft of the contra-rotating sleeve shaft and the outer shaft of the contra-rotating sleeve shaft have the same rotation speed and opposite rotation directions.

The two-way deflector includes a first driving bevel gear (5), a second driving bevel gear (6), a first driven bevel gear (7), a second driven bevel gear (8), a first output shaft (19) and a second output shaft (20). The first driving bevel gear (5) is directly connected to the inner shaft of the contra-rotating sleeve shaft, and the second driving bevel gear (6) is directly connected to the outer shaft of the contra-rotating sleeve shaft. An axis of the first output shaft, the axis of the contra-rotating sleeve shaft and an axis of the second output shaft are provided to be in the same plane, a first deflecting angle is 91 degrees, and a second deflecting angle is 89 degrees; the first driven bevel gear (7) is provided on the first output shaft (19), and the second driven bevel gear (8) is provided on the second output shaft (20). The first output shaft (19) is directly connected to a first output end (13), and the second output shaft (20) is directly connected to a second output end (14). The first driving bevel gear (5) is kept engaged with the first driven bevel gear (7), and the second driving bevel gear (6) is kept engaged with the second driven bevel gear (8). The transmission ratio from the inner shaft of the contra-rotating sleeve shaft to the first output end is made equal to the transmission ratio from the outer shaft of the contra-rotating sleeve shaft to the second output end, and takes: the number of teeth of the first driving bevel gear = the number of teeth of the first driven bevel gear = the number of teeth of the second driving bevel gear = the number of teeth of the second driven bevel gear = 17.

The steering support includes a shaft-fixed bearing (9), a bracket (10), a first shaft-movable bearing (11) and a second shaft-movable bearing (12). A second type of the shaft-fixed component (9) is provided on the axis of the contra-rotating sleeve shaft, and the bearing thereof is fixed. The first shaft-movable bearing (11) is provided outside the first output shaft (19) to support the first output shaft; and the second shaft-movable bearing (12) is provided outside the second output shaft (20) to support the second output shaft. The bracket (10) directly connects the shaft-fixed component (9) to all the shaft-movable bearings, and the entire steering support may be turned around. The shaft-fixed component (9) is directly connected to the turnaround control device, and the turnaround control device adopts a hydraulic mechanism, namely, a hydraulic motor, which is a mature apparatus.

The first output end (13) and the second output end (14) of the two output ends are respectively connected to the two propellers of the submarine.

The turnaround control device controls the steering support, the two output ends and the two propellers to be turned around. The control torque required for co-rotating and contra-rotating during turnaround is the same, the turnaround control torque is very small, and the control device is very small. The contra-rotating sleeve shaft is arranged in the vertical direction of the submarine, and the two propellers may be turned around at a large angle, and the submarine may be yawed and propelled; the collective pitch of the two propellers is differentially changed, and the submarine may be pitched and propelled. In this embodiment, the two propellers have opposite rotation directions.

**Embodiment 3:** Embodiment 3 of the coaxial contra-rotating circumferential thruster of the present invention is used for the transmission of the rotor of a tilt-rotor aircraft, and is composed of an input end (1), a one-way commutator, a two-way deflector, a steering support and two output ends. Reference is made to FIG. 3.

The power from a power device is input at the input end (1), and the input end (1) is connected at the rear to a co-directional shaft (2).

The one-way commutator adopts a third type of the one-way commutator, including a co-directional shaft (2), a front gear (3), an inner side shaft gear (17), an outer side shaft front gear (15), an outer side shaft rear gear (16), an inner side shaft, an outer side shaft, a rear gear (18) and a contra-rotating sleeve shaft (4). The contra-rotating sleeve shaft includes an inner shaft of the contra-rotating sleeve shaft and an outer shaft of the contra-rotating sleeve shaft. A bearing of the co-directional shaft is provided to be fixed, and the front gear (3) is provided on the co-directional shaft (2). The inner side shaft and the outer side shaft whose axes are respectively parallel to the co-directional shaft (2) and whose bearings are both fixed are provided, the inner side shaft gear (17) is provided on the inner side shaft, and the outer side shaft front gear (15) and the outer side shaft rear gear (16) are sequentially provided on the outer side shaft; and the rear gear (18) is provided on the outer shaft of the contra-rotating sleeve shaft. The front gear (3) is engaged with the outer side shaft front gear (15), the outer side shaft rear gear (16) is engaged with the inner side shaft gear (17), and the inner side shaft gear (17) is engaged with the rear gear (18). The contra-rotating sleeve shaft (4) and the co-directional shaft (2) are provided to be located on the same axis, and the co-directional shaft (2) is directly connected to the inner shaft of the contra-rotating sleeve shaft. The front gear (3) is indirectly connected to the rear gear (18) by means of the outer side shaft front gear (15), the outer side shaft rear gear (16) and the inner side shaft gear (17). The transmission ratio of this indirect connection is made equal to -1.0, and takes: the number of teeth of the outer side shaft rear gear = the number of teeth of the inner side shaft gear = the number of teeth of the rear gear = 17, and the number of teeth of the front gear = the number of teeth of the outer side shaft front gear = 34. The inner shaft of the contra-rotating sleeve shaft and the outer shaft of the contra-rotating sleeve shaft have the same rotation speed and opposite rotation directions.

The two-way deflector includes a first driving bevel gear (5), a second driving bevel gear (6), a first driven bevel gear (7), a second driven bevel gear (8) and an output sleeve shaft (12). A first output shaft is an inner shaft of the output sleeve shaft and is connected to a first output end (13); a second output -shaft is an outer shaft of the output sleeve shaft and is connected to a second output end (14). The first driving bevel gear (5) is directly connected to the inner shaft of the contra-rotating sleeve shaft, and the second driving bevel gear (6) is directly connected to the outer shaft of the contra-rotating sleeve shaft. An axis of the output sleeve shaft and an axis of the contra-rotating sleeve shaft are provided to form an included angle in the same plane, the included angle is a deflecting angle, and the deflecting angle in this embodiment is 90 degrees. The first driven bevel gear (7) is provided on the inner shaft of the output sleeve shaft, and the second driven bevel gear (8) is provided on the outer shaft of the output sleeve shaft. The first driving bevel gear (5) is kept engaged with the first driven bevel gear (7), and the second driving bevel gear (6) is kept engaged with the second driven bevel gear (8). The transmission ratio from the inner shaft of the contra-rotating sleeve shaft to the inner shaft of the output sleeve shaft is made equal to the transmission ratio from the outer shaft of the contra-rotating sleeve shaft to the outer shaft of the output sleeve shaft, and takes: the number of teeth of the first driving bevel gear = the number of teeth of the first driven bevel gear =17, and the number of teeth of the second driving bevel gear = the number of teeth of the second driven bevel gear = 19.

The steering support includes a shaft-fixed component (9), a bracket (10) and a shaft-movable bearing (11). A third type of the shaft-fixed component (9) is provided on the axis of the contra-rotating sleeve shaft, and the shaft thereof is fixed. The shaft-movable bearing (11) is provided on the periphery of the output sleeve shaft (12) to support the output sleeve shaft, the bracket (10) directly connects the shaft-fixed component (9) to the shaft-movable bearing (11), and the entire steering support may be turned around. A worm wheel (19) is provided on the shaft-fixed component (9), the worm wheel (19) is kept synchronized with the shaft-fixed component (9), and a mating worm (20) is provided to be engaged with the worm wheel (19) to form a worm gear; the number of heads of the worm is 2, the number of teeth of the worm wheel is 30, and the transmission ratio of the worm gear is 15. The worm (20) is connected to a turnaround control device, and the turnaround control device adopts an electric mechanism.

The two output ends include a first output end (13) and a second output end (14), and the two output ends are respectively connected to the two rotors of the coaxial contra-rotating double-rotor. The coaxial contra-rotating double-rotor adopts a mature technology, and the rotors thereof include blades and pitch-changing devices.

The contra-rotating sleeve shaft is arranged along the wing, and the turnaround control device drives the steering support, the output sleeve shaft (12) and the coaxial contra-rotating double-rotor to be turned around by means of the worm gear, the turnaround is a tilt, and the coaxial contra-rotating double-rotor is provided as the left double-rotor of the tilt-rotor aircraft. In the same way, another set of coaxial contra-rotating double-rotor is provided as the right double-rotor of the tilt-rotor aircraft. In this embodiment, the control torque for co-rotating and contra-rotating when the coaxial contra-rotating double-rotor is tilted is the same, the turnaround control torque is very small, and the control device is very small. The angle of the turnaround is up to 360 degrees, which is much larger than 97.5 degrees of the tilt angle of the rotors of the traditional tilt-rotor aircraft. Compared with the left and right single-rotor of the traditional tilt-rotor aircraft, the left and right double-rotor of this embodiment can bear a larger load under the condition of the same diameter of the rotors.

**Embodiment 4:** Embodiment 4 of the coaxial contra-rotating circumferential thruster of the present invention is used for the transmission of two propellers of a submarine, and is composed of an input end (1), a one-way commutator, a two-way deflector, a steering support and two output ends. Reference is made to FIG. 4.

The power from a power device is input at the input end (1), and the input end (1) is connected at the rear to a co-directional shaft (3).

The one-way commutator adopts a fourth type of the one-way commutator, including a co-directional shaft (3), an inner driving bevel gear (15), an outer driving bevel gear (16), an inner driven bevel gear (17), an outer driven bevel gear (18) and a contra-rotating sleeve shaft (4). The contra-rotating sleeve shaft includes an inner shaft of the contra-rotating sleeve shaft and an outer shaft of the contra-rotating sleeve shaft. A bearing of the co-directional shaft is provided to be fixed, the outer driving bevel gear (16) and the inner driving bevel gear (15) are provided on the co-directional shaft (3), and are respectively disposed on both sides of an axis of the contra-rotating sleeve shaft, the inner driving bevel gear is provided without passing through the axis of the contra-rotating sleeve shaft, and the outer driving bevel gear is provided to pass through the axis of the contra-rotating sleeve shaft; the axis of the contra-rotating sleeve shaft and an axis of the co-directional shaft are provided to form a transmission angle in the same plane, the bearing of the contra-rotating sleeve shaft is fixed, and the transmission angle in this embodiment is 90 degrees; the inner driven bevel gear (17) is provided on the inner shaft of the contra-rotating sleeve shaft, so that the inner driven bevel gear (17) is engaged with the inner driving bevel gear (15); and the outer driven bevel gear (18) is provided on the outer shaft of the contra-rotating sleeve shaft, so that the outer driven bevel gear (18) is engaged with the outer driving bevel gear (16). The transmission ratio from the co-directional shaft to the inner shaft of the contra-rotating sleeve shaft is made equal to the negative value of the transmission ratio from the co-directional shaft to the outer shaft of the contra-rotating sleeve shaft, and takes: the number of teeth of the inner driving bevel gear = the number of teeth of the inner driven bevel gear = 17, and the number of teeth of the outer driving bevel gear = the number of teeth of the outer driven bevel gear = 23. The inner shaft of the contra-rotating sleeve shaft and the outer shaft of the contra-rotating sleeve shaft have the same rotation speed and opposite rotation directions.

The two-way deflector includes a first driving bevel gear (5), a second driving bevel gear (6), a first driven bevel gear (7), a second driven bevel gear (8), a first output shaft (19) and a second output shaft (20). The first driving bevel gear (5) is directly connected to the inner shaft of the contra-rotating sleeve shaft, and the second driving bevel gear (6) is directly connected to the outer shaft of the contra-rotating sleeve shaft. An axis of the first output shaft, the axis of the contra-rotating sleeve shaft and an axis of the second output shaft are provided to be in the same plane, a first deflecting angle is 91 degrees, and a second deflecting angle is 89 degrees; the first driven bevel gear (7) is provided on the first output shaft (19), and the second driven bevel gear (8) is provided on the second output shaft (20). The first output shaft (19) is directly connected to a first output end (13), and the second output shaft (20) is directly connected to a second output end (14). The first driving bevel gear (5) is kept engaged with the first driven bevel gear (7), and the second driving bevel gear (6) is kept engaged with the second driven bevel gear (8). The transmission ratio from the inner shaft of the contra-rotating sleeve shaft to the first output end is made equal to the transmission ratio from the outer shaft of the contra-rotating sleeve shaft to the second output end, and takes: the number of teeth of the first driving bevel gear = the number of teeth of the first driven bevel gear = the number of teeth of the second driving bevel gear = the number of teeth of the second driven bevel gear = 17.

The steering support includes a shaft-fixed bearing (9), a bracket (10), a first shaft-movable bearing (11) and a second shaft-movable bearing (12). A second type of the shaft-fixed component (9) is provided on the axis of the contra-rotating sleeve shaft, and the bearing thereof is fixed. The first shaft-movable bearing (11) is provided outside the first output shaft (19) to support the first output shaft; and the second shaft-movable bearing (12) is provided outside the second output shaft (20) to support the second output shaft. The bracket (10) directly connects the shaft-fixed component (9) to all the shaft-movable bearings, and the entire steering support may be turned around. The shaft-fixed component (9) is directly connected to the turnaround control device, and the turnaround control device adopts a hydraulic mechanism, namely, a hydraulic motor, which is a mature apparatus.

The first output end (13) and the second output end (14) are respectively connected to the two propellers of the submarine.

The turnaround control device controls the steering support, the two output ends and the two propellers to be turned around. The control torque required for co-rotating and contra-rotating during turnaround is the same, the turnaround control torque is very small, and the control device is very small. The contra-rotating sleeve shaft is arranged in the vertical direction of the submarine, and the two propellers may be turned around at a large angle, and the submarine may be yawed and propelled; the collective pitch of the two propellers is differentially changed, and the submarine may be pitched and propelled. In this embodiment, the two propellers have the same rotation directions.

The basic principles, main features and advantages of the present invention have been shown and described above. Those skilled in the art should understand that the present invention is not limited by the above embodiments, and there are various changes and improvements to the present invention without departing from the spirit and scope of the present invention, and these changes and improvements all fall within the scope of protection of the present invention as claimed. The scope of protection of the present invention as claimed is defined by the appended claims and equivalents.

## Claims

1. A coaxial contra-rotating circumferential thruster, composed of an input end, a one-way commutator, a two-way deflector, a steering support and two output ends, wherein
power from a power device is input at the input end, and the input end is connected at the rear to a co-directional shaft;
there are four types of the one-way commutator, one of which is selected: a first type of the one-way commutator, comprises the co-directional shaft, a front bevel gear, a reversing bevel gear, a reversing bevel gear support, a rear bevel gear and a contra-rotating sleeve shaft; a bearing of the co-directional shaft is provided to be fixed, and the front bevel gear is provided on the co-directional shaft, the reversing bevel gear whose support is fixed is provided to be engaged with the front bevel gear; an axis of the reversing bevel gear is perpendicular to an axis of the co-directional shaft, and the reversing bevel gear is connected to a shaft lever, and the bearing thereof is fixed as a support; the contra-rotating sleeve shaft is provided to be located on the same axis as the co-directional shaft, a bearing of the contra-rotating sleeve shaft is fixed, the rear bevel gear is provided to be engaged with the reversing bevel gear on an outer shaft of the contra-rotating sleeve shaft, the co-directional shaft is directly connected to an inner shaft of the contra-rotating sleeve shaft, and the front bevel gear is indirectly connected to the rear bevel gear by means of the reversing bevel gear; the number of teeth of the front bevel gear is set to be equal to the number of teeth of the rear bevel gear, such that a transmission ratio of this indirect connection is equal to -1.0; the first type of the one-way commutator makes the inner shaft of the contra-rotating sleeve shaft and the outer shaft of the contra-rotating sleeve shaft have the same rotation speed and opposite rotation directions;
the two-way deflector comprises a first driving bevel gear, a first driven bevel gear, a first output shaft, a second driving bevel gear, a second driven bevel gear and a second output shaft; the first driving bevel gear is provided on the inner shaft of the contra-rotating sleeve shaft, an axis of the first output shaft is provided to intersect with an axis of the contra-rotating sleeve shaft, and the included angle of the intersection is a first deflecting angle, the first driven bevel gear is provided on the first output shaft to keep the first driving bevel gear engaged with the first driven bevel gear; and the second driving bevel gear is provided on the outer shaft of the contra-rotating sleeve shaft, an axis of the second output shaft is provided to intersect with the axis of the contra-rotating sleeve shaft, and the included angle of the intersection is a second deflecting angle, the second driven bevel gear is provided on the second output shaft to keep the second driving bevel gear engaged with the second driven bevel gear;
the steering support comprises a shaft-fixed component, a bracket and a shaft-movable bearing; the shaft-fixed component is a machine that is turned around the axis of the contra-rotating sleeve shaft, there are three types of the shaft-fixed component in the steering support, one of which is selected: a first type of the shaft-fixed component is a bearing that is provided on the periphery of the contra-rotating sleeve shaft, the bearing supports the contra-rotating sleeve shaft; and the shaft-movable bearing is a bearing that supports the output sleeve shaft, and is provided on the periphery of the output sleeve shaft, the first output shaft is supported by the first shaft-movable bearing which is provided on the periphery of the first output shaft, and the second output shaft is supported by the second shaft-movable bearing which is provided on the periphery of the second output shaft; when the two output shafts form a special case of the output sleeve shaft, the first shaft-movable bearing and the second shaft-movable bearing are combined into a shaft-movable bearing that supports the output sleeve shaft and is provided on the periphery of the output sleeve shaft; the bracket is a connecting machine that directly connects the shaft-fixed component to all the shaft-movable bearings, the direct connection makes the rotation speed of the steering support unchanged; when the bracket directly connects the shaft-fixed component to all the shaft-movable bearings, the entire steering support can be turned around the axis of the contra-rotating sleeve shaft, the steering support is directly or indirectly connected to the turnaround control device, and is turned around under the control of the turnaround control device;
the two output ends are respectively a first output end and a second output end, the output shaft where the first output end is located is the first output shaft, and the output shaft where the second output end is located is the second output shaft; the two output ends are respectively connected to the two propellers (or rotors); and when the two output shafts form a special case of the output sleeve shaft, the two output ends are respectively connected to the two propellers (or rotors) of the coaxial contra-rotating double-propeller (or rotor);
with respect to the coaxial contra-rotating circumferential thruster of the present invention, the turnaround control device controls the steering support to be turned around, drives the two output ends to be turned around, and drives the two propellers to be turned around; the control torque required for co-rotating and contra-rotating during turnaround is the same, the turnaround control torque is very small, and the control device is very small.

2. The coaxial contra-rotating circumferential thruster according to claim 1, wherein the one-way commutator is replaced by a second type of the one-way commutator, and the second type of the one-way commutator comprises the co-directional shaft, an inner driving bevel gear, an outer driving bevel gear, an inner driven bevel gear, an outer driven bevel gear and the contra-rotating sleeve shaft; a bearing of the co-directional shaft is provided to be fixed, the inner driving bevel gear and the outer driving bevel gear are provided on the co-directional shaft, and are respectively disposed on both sides of the axis of the contra-rotating sleeve shaft; the inner driving bevel gear is provided to pass through the axis of the contra-rotating sleeve shaft, and the outer driving bevel gear is provided without passing through the axis of the contra-rotating sleeve shaft; the bearing of the contra-rotating sleeve shaft is fixed, the axis of the contra-rotating sleeve shaft and the axis of the co-directional shaft are provided to form an included angle in the same plane, the included angle is a transmission angle; the inner driven bevel gear is provided on the inner shaft of the contra-rotating sleeve shaft to keep the inner driven bevel gear engaged with the inner driving bevel gear, and the outer driven bevel gear is provided on the outer shaft of the contra-rotating sleeve shaft to keep the outer driven bevel gear engaged with the outer driving bevel gear; the number of teeth of the inner driving bevel gear, the number of teeth of the outer driving bevel gear, the number of teeth of the inner driven bevel gear and the number of teeth of the outer driven bevel gear are set such that the transmission ratio from the co-directional shaft to the inner shaft of the contra-rotating sleeve shaft is equal to a negative value of the transmission ratio from the co-directional shaft to the outer shaft of the contra-rotating sleeve shaft, the second type of the one-way commutator makes the inner shaft of the contra-rotating sleeve shaft and the outer shaft of the contra-rotating sleeve shaft have the same rotation speed and opposite rotation directions.

3. The coaxial contra-rotating circumferential thruster according to claim 1, wherein the one-way commutator is replaced by a third type of the one-way commutator, and the third type of the one-way commutator comprises the co-directional shaft, a front gear, an inner side shaft gear, an outer side shaft front gear, an outer side shaft rear gear, an inner side shaft, an outer side shaft, a rear gear and the contra-rotating sleeve shaft; the bearing of the co-directional shaft is provided to be fixed, the front gear is provided on the co-directional shaft, the inner side shaft and the outer side shaft whose axes are respectively parallel to the axis of the co-directional shaft and whose bearings are both fixed are provided; the inner side shaft gear is provided on the inner side shaft, and the outer side shaft front gear and the outer side shaft rear gear are sequentially provided on the outer side shaft; the rear gear is provided on the outer shaft of the contra-rotating sleeve shaft, the front gear is provided to be engaged with the outer side shaft front gear, the outer side shaft rear gear is engaged with the inner side shaft gear, the inner side shaft gear is engaged with the rear gear; the contra-rotating sleeve shaft is provided to be located on the same axis as the co-directional shaft, the bearing of the contra-rotating sleeve shaft is fixed, the co-directional shaft is provided to be directly connected to the inner shaft of the contra-rotating sleeve shaft, the front gear is indirectly connected to the rear gear by means of the outer side shaft front gear, the outer side shaft rear gear, the inner side shaft gear; the number of teeth of the inner side shaft gear, the number of teeth of the outer side shaft front gear, the number of teeth of the outer side shaft rear gear, the number of teeth of the front gear and the number of teeth of the rear gear are set such that the transmission ratio of this indirect connection is equal to -1.0, the third type of the one-way commutator makes the inner shaft of the contra-rotating sleeve shaft and the outer shaft of the contra-rotating sleeve shaft have the same rotation speed and opposite rotation directions.

4. The coaxial contra-rotating circumferential thruster according to claim 1, wherein the one-way commutator is replaced by a fourth type of the one-way commutator, and the fourth type of the one-way commutator comprises the co-directional shaft, an inner driving bevel gear, an outer driving bevel gear, an inner driven bevel gear, an outer driven bevel gear and the contra-rotating sleeve shaft; the bearing of the co-directional shaft is provided to fixed, and the inner driving bevel gear and the outer driving bevel gear are provided on the co-directional shaft, and are respectively disposed on both sides of the axis of the contra-rotating sleeve shaft; the inner driving bevel gear is provided without passing through the axis of the contra-rotating sleeve shaft, and the outer driving bevel gear is provided to pass through the axis of the contra-rotating sleeve shaft; the bearing of the contra-rotating sleeve shaft is fixed, the axis of the contra-rotating sleeve shaft and the axis of the co-directional shaft are provided to form an included angle in the same plane, the included angle is a transmission angle; the inner driven bevel gear is provided on the inner shaft of the contra-rotating sleeve shaft to keep the inner driven bevel gear engaged with the inner driving bevel gear, and the outer driven bevel gear is provided on the outer shaft of the contra-rotating sleeve shaft to keep the outer driven bevel gear engaged with the outer driving bevel gear; the number of teeth of the inner driving bevel gear, the number of teeth of the outer driving bevel gear, the number of teeth of the inner driven bevel gear and the number of teeth of the outer driven bevel gear are set such that the transmission ratio from the co-directional shaft to the inner shaft of the contra-rotating sleeve shaft is equal to a negative value of the transmission ratio from the co-directional shaft to the outer shaft of the contra-rotating sleeve shaft, the fourth type of the one-way commutator makes the inner shaft of the contra-rotating sleeve shaft and the outer shaft of the contra-rotating sleeve shaft have the same rotation speed and opposite rotation directions.

5. The coaxial contra-rotating circumferential thruster according to claim 1, wherein the shaft-fixed component in the steering support thereof is replaced by a second type of the shaft-fixed component, and the second type of the shaft-fixed component is a shaft that is provided on the axis of the contra-rotating sleeve shaft, the bearing of which is fixed, and the bracket and the shaft-movable bearing in the steering support remain unchanged.

6. The coaxial contra-rotating circumferential thruster according to claim 1, wherein the shaft-fixed component in the steering support thereof is replaced by a third type of the shaft-fixed component, and the third type of the shaft-fixed component is a bearing that is provided on the axis of the contra-rotating sleeve shaft, the shaft of which is fixed, and the bracket and the shaft-movable bearing in the steering support remain unchanged.
